# EUROPEAN PATENT SPECIFICATION

(11) **EP 2 168 923 B1**
(45) Date of publication and mention of the grant of the patent: **11.09.2013**
(21) Application number: 08790785.3
(22) Date of filing: 01.07.2008
(51) Int. Cl.: C03B 5/182, C03B 5/193, C03B 5/04

(54) **GLASS MELTING FURNACE AND PROCESS FOR PRODUCING GLASS PRODUCT**
GLASSCHMELZOFEN UND VERFAHREN ZUR HERSTELLUNG EINES GLASPRODUKTS
FOUR DE FUSION DE VERRE ET PROCÉDÉ DE FABRICATION D'UN PRODUIT DE VERRE

(30) Priority: 02.07.2007 JP 2007174263
(43) Date of publication of application: 31.03.2010
(73) Proprietor: Asahi Glass Company, Limited, Chiyoda-ku Tokyo 100-8405 (JP)
(72) Inventor: FUNAKOSHI, Hisashi, Tokyo 100-8405 (JP)
(74) Representative: Müller-Boré & Partner Patentanwälte
(86) International application number: PCT/JP2008/061922
(87) International publication number: WO 2009/005067

(56) References cited:
- EP-A2- 0 763 503
- FR-A- 1 157 242
- JP-A- 04 228 433
- JP-A- 63 310 734
- JP-U- 58 148 027
- US-A- 3 218 144
- US-A- 3 532 483
- US-A- 6 154 481
- US-A1- 2004 099 009

## Description

### TECHNICAL FIELD

The present invention relates to a technology of melting glass, further in details, relates to a structure of a melting furnace for a glass.

### BACKGROUND ART

In a background art, a method of manufacturing a glass product is constituted by a melting step of providing molten glass mainly by melting raw materials, a forming step of forming the molten glass to a shape of a predetermined glass product and a annealing step of gradually cooling the glass product while removing an internal strain thereof. Further, here, the melting step includes to remove bubbles from the molten glass and to homogenize the molten glass.
In a step of manufacturing a glass product of a glass sheet for architecture, a glass sheet for an automobile, a glass product for a CRT(Cathod Ray Tube), a glass sheet for a display and the like, high quality production and low cost production are further requested. Although there are a number of factors hampering the high quality production, remaining of bubbles generated from the molten glass and an inhomogeneous property of the molten glass frequently pose a problem. In order to manufacture a high quality glass product which bubles are not contained, the melting step in the above-described steps is important. The melting step is a step of preparing raw materials of silica sand, limestone, soda ash and the like in accordance with a composition of the glass product, feeding a batch mixed therewith to a melting furnace for a glass, heating to melt the batch to about 1400°C or higher in accordance with a kind of the glass to provide the molten glass. For example, the molten glass is provided by feeding the batch into a publicly-known glass melting furnace from one end of the glass melting furnace, burning flame provided by combusting heavy oil to the batch, or, burning flame provided by mixing natural gas with air to combust, and heating the batch to about 1550°C or higher to melt the batch. Further, depending on cases, the molten glass is provided by using a publicly-known electric melting furnace.

As one of methods of removing bubbles from the molten glass in the melting step for achieving high quality, there is a method of ensuring a time period of exhausting bubbles from the molten glass by reducing a melting amount per unit time (pull). However, when the pull is reduced, naturally, a productivity is reduced to cause to increase cost. In order to achieve effects of both exhaustion of bubbles (fining) and homogeneous production simultaneously while maintaining the pull to some degree, a characteristic of a convection of the molten glass (convection structure, temperatures of respective portions of convection, flow velocity of respective portions of convection) is changed by a structure of the glass melting furnace.

For example, Patent Reference 1 discloses a convection when a longitudinal direction is constituted by the raw material feeding portion of the glass melting furnace through a molten glass guide out portion, a width direction is constituted by a direction orthogonal thereto, a bubbler is provided for forming a convection mainly in an upper direction by generating bubbles at inside of the molten glass from a deepest portion by crossing in the width direction of the deepest portion of inside of the glass melting furnace, and a damwall is provided. Patent Reference 2 discloses convection when a plurality of steps and a stage portion crossing the width direction are provided from a middle of the deepest portion of inside of the glass melting furnace to the molten glass guide out portion. Patent Reference 3 discloses a convection when a bubbler, a damwall, and one stage of step and a stage portion are provided.
Further, Patent Document 4 discloses a glass melting furnace. In this glass melting furnace, a radiation screen wall is installed between a melting area and a refining area with a refining bank. This radiation screen wall leaves a flow path above the melt surface of the glass bath for the return flow of at least part of the combustion gases from the refining area to the melting area. In order to suppress a return flow of already refined and very hot glass melt from the refining area into a melting area, but still allow the charging material to melt completely as early as possible, the furnace is operated to produce at least one upward current between the middle of the melting area and the front face of the refining bank in the glass melt. Within the glass melt and before the melt surface is reached, this upward current is divided into a first partial current which flows upstream into the melting area and a second partial current which flows downstream over the refining bank, whereby a return current of the glass melt from the refining area into the melting area is prevented by the second partial current flowing downstream. The upward current is achieved by the use of: a row of bubblers, a step projecting upwards from the furnace bottom; and/or at least two heating electrodes which are installed before the front face of the refining bank.
Document 5 discloses a furnace for melting vitrifiable materials, including a compartment for melting and refining the glass equipped, upstream, with at least one means for charging vitrifiable-materials and leading, downstream, into a compartment or a series or compartments intended to lead the molten glass as far as the forming zone. It is equipped with a first means for controlling the convective flows of the mass of molten glass in the form of a transverse sill delimiting an "upstream" zone and a "downstream" zone. Associated with this sill are complementary means for controlling the convective flows in the "upstream" zone including, as a minimum, submerged "upstream" heating means located close to and upstream of the sill, in order to prevent molten glass that has reached said the "downstream" zone from returning into the said "upstream" zone. Another subject of the invention is the application of such a furnace and the method of operating it.

[Patent Document 1] JP-UM-A-53-51451
[Patent Document 2] JP-A-4-228433
[Patent Document 3] JP-A-9-124323
[Patent Document 4] US 6,154,481 A
[Patent Document 5] EP 0 763 503 A2

### DISCLOSURE OF THE INVENTION

### PROBLEMS TO BE SOLVED BY THE INVENTION

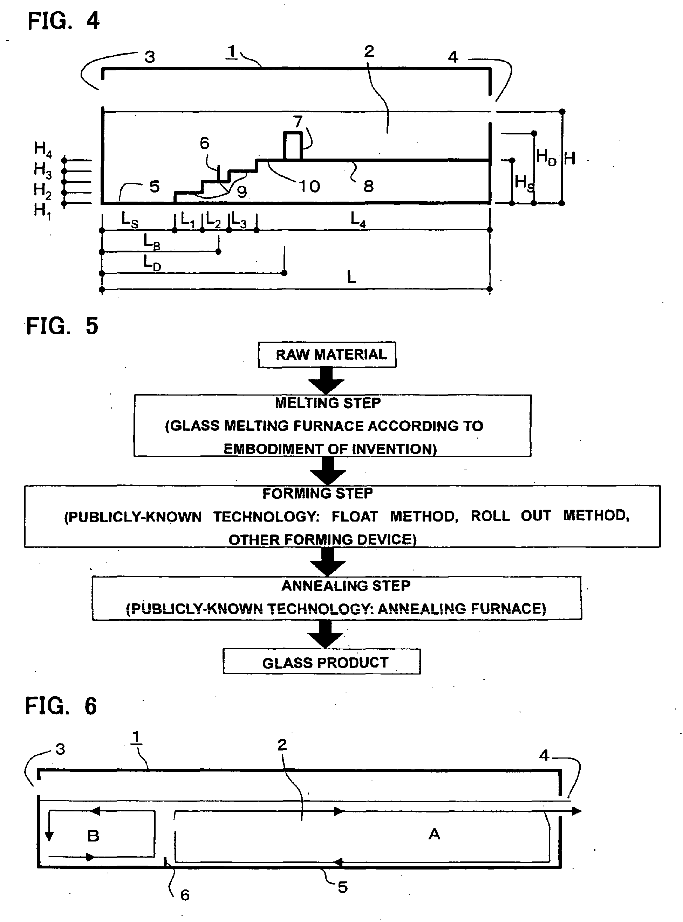

Here, an explanation will be given of a characteristic of a convection at a glass melting furnace of a background art having the bubbler, the damwall, the step, and the stage portion by using Figs. 6 through 9. The drawings show convections in molten glass at sections in longitudinal directions of the glass melting furnaces by arrow marks, and left sides of the respective drawings are raw material feeding sides (rear sides) and right sides thereof are molten glass guide out sides (front sides).

Fig.6 shows a convection when only a bubbler 6 is provided (hereinafter, referred to as flat furnace). The flat furnace is constituted by a glass melting structure in which molten glass 2 is difficult to stagnate since there is not a portion of blocking the convection in view of the structure. By determining a hot spring which is a region constituting a dividing line of a rear circulating flow B and a front circulating flow A and actively bringing about fining by a balance of intensities of the rear circulating flow B and the front circulating flow A, quality of bubbles and reams is liable to be changed in accordance with a variation of the convection.

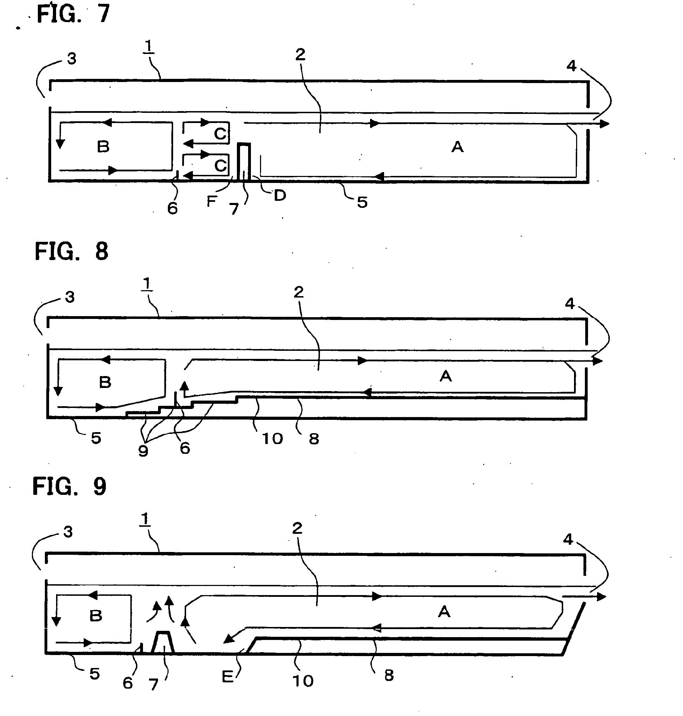

Fig.7 shows a convection when the bubbler 6 and a damwall 7 are provided (hereinafter, referred to as dam furnace). The structure is a case similar to the arrangement of the bubbler and the damwall disclosed in Patent Reference 1. The rear circulating flow B and the front circulating flow A can clearly be divided by the damwall 7, and therefore, the rear circulating flow B can be activated by frequently using the bubbler 6 at the rear circulating region. Thereby, a homogeneous property of the molten glass 2 is improved. Further, a convection speed of the molten glass 2 moving from the rear circulating region to the front circulating region can be reduced by the damwall 7 and an excellent fining can be achieved. On the other hand, there is a case in which the molten glass 2 is stagnated at a vicinity of the damwall 7 and bubbles and reams are stagnated.

Fig.8 shows a convection when the bubbler 6, steps 9 and 10, and a stage portion 8 are provided (hereinafter, referred to as step furnace). The structure is a case similar to a structure disclosed in Patent Reference 2. Although the step furnace is excellent in the circulation and the homogeneous property at the rear portion since a section of the flow path of the rear circulating region is wider than that of the front circulating region in view of the structure, when the rear circulating flow B is excessively activated, a portion of the inhomogeneous molten glass 2 is slipped off, and the fining is deteriorated since a time period for fining is shortened.

Fig.9 shows a convection of a case similar to Patent Reference 3 providing the bubbler 6, the damwall 7, the step 10 (only one stage/step), and the stage portion 8 (hereinafter, referred to as a dam & step furnace). There is a case in which the dam & step furnace in which a stagnating region E (step rear portion) is formed at a vicinity of an end portion on a rear portion side of the step 10 in view of the structure, and bubbles and reams are precipitated.

Although properties of convections of various glass melting furnaces can be explained individually as described above, the convection of molten glass at inside of the glass melting furnace is complicated, and there are a variety of convection paths from an inlet to an outlet of the glass melting furnace, and it is not necessarily made to be clear how the structure of the glass melting furnace is to be designed as a basic structure, how constituent elements of the bubbler, the damwall, the step, and the stage portion or the like are to be arranged. As a cause thereof, there is also a point in which although in, for example, a linear dynamics problem, when a plurality of external forces are operated, a stress distribution by the plurality of external forces can be grasped by superposing stress distributions generated by the respective external forces, in a convection phenomenon, the convection is complicatedly changed also by temperatures of respective portions of the molten glass and the convection of a total cannot simply be predicted only by superposing phenomena (convections) for the respective constituent elements.

The invention has been carried out in view of the above-described and it is an object thereof to provide a glass melting furnace capable of realizing a high fining and a high homogeneous property by changing a characteristic of a convection of molten glass and a method of manufacturing a glass product utilizing the same.

### MEANS FOR SOLVING THE PROBLEMS

The inventors have found a positional relationship among a bubbler, a damwall, a step, and a stage portion capable of simultaneously satisfying that large convections (circulating flows) are formed at a rear portion, a front portion and a middle portion of molten glass at inside of a glass melting furnace in a melting step, melting at a rear circulating flow can be activated and a stagnating regions are not brought about by aiming at circulating properties suitable for the respective convections, that a fining is promoted in the front circulating flow, that the stagnating region is not brought about at a topmost stage of the step, and that a convection at a step region at the topmost stage is not hampered.

That is, the invention is characterized in a glass melting furnace including a plurality of steps elevated from a middle of a deepest portion of an inner portion of the glass melting furnace along a direction of guiding out a molten glass and crossing in a width direction orthogonal to the direction of guiding out the molten glass, a stage portion extended from a topmost stage of the step in the direction of guiding out the molten glass and crossing in the width direction, a damwall crossing in the width direction on a side of the step of the stage portion, and a bubbler crossing in the width direction between above the step of a bottommost stage of the step and the damwall.

According to the invention, in addition to promotion of a homogeneous property by enabling to activate the rear circulating flow and a reduction in the stagnating region before and after the damwall, by particularly providing the damwall on the stage portion, a rearward flow of the front circulating flow is provided with a flow rate to a degree the same as that of a forward flow, the damwall is disposed on the stage portion and a height of the damwall is lower than that of the dam furnace, and therefore, the flow is liable to move upstream to the middle region or the rear portion by passing the region having the high fining of the upper portion of the damwall, as a result, the high homogenizing production and fining by remelting, reheating, refining which cannot be observed in other glass melting furnace can be achieved.

The invention may be constructed by a constitution of replacing all the step portion according to the invention by a slope. Further, all the step portions may be constituted by a number of steps capable of being regarded substantially as a slope. That is, the invention may be constituted by a glass melting furnace including a slope elevated from a middle of a deepest portion of an inner portion of the glass melting furnace along a direction of guiding out a molten glass and crossing in a width direction orthogonal to the direction of guiding out the molten glass, a stage portion extended from a topmost portion of the slope in the direction of guiding out the molten glass and crossing in the width direction, a damwall crossing in the width direction on a side of the slope of the stage portion, and a bubbler crossing in the width direction between a position of starting to elevate the slope and the damwall.

Further, the invention is a method of manufacturing a molten glass characterized in melting a glass raw material by the glass melting furnace, and a method of manufacturing a glass product characterized in including a melting step of melting a glass raw material by the glass melting furnace.

### ADVANTAGEOUS EFFECTS OF THE INVENTION

According to the invention, the high fining and the high homogeneous property are achieved by resolving the problems of the respective furnaces of the background art by changing the characteristic of the convection of the molten glass by integrating the constituent elements arranged at inside of the glass melting furnace. Further, the glass product having the high fining and the high homogeneous property is provided by the method of manufacturing the glass product comprising the melting step by the glass melting furnace according to the invention.

### BRIEF DESCRIPTION OF THE DRAWINGS

Fig.1 is a furnace sectional view showing convection in a molten glass in an outline section in a longitudinal direction of a glass melting furnace according to an embodiment.
Fig.2 is a furnace sectional view showing convection in a molten glass in an outline section in a longitudinal direction of a glass melting furnace according to other embodiment.
Fig.3 is a furnace sectional view showing convection in a molten glass in an outline section in a longitudinal direction of a glass melting furnace according to other embodiment.
Fig.4 is a furnace sectional view showing parameters with regard to a shape of an embodiment.
Fig.5 is a diagram showing steps of a method of manufacturing a glass product characterized in a glass melting furnace of an embodiment.
Fig.6 is a furnace sectional view showing convection in a molten glass in an outline section in a longitudinal direction of a flat furnace as a background art.
Fig.7 is a furnace sectional view showing convection in a molten glass in an outline section in a longitudinal direction of a dam furnace as a background art.
Fig.8 is a furnace sectional view showing convection in a molten glass in an outline section in a longitudinal direction of a step furnace as a background art.
Fig.9 is a furnace sectional view showing convection in a molten glass in an outline section in a longitudinal direction of a dam & step furnace as a background art.

### DESCRIPTION OF REFE4RENCE NUMERALS AND SIGNS

- 1: glass melting furnace
- 2: molten glass
- 3: raw material feeding portion
- 4: molten glass guide out portion
- 5: deepest portion
- 6: bubbler
- 7: damwall
- 8: stage portion
- 9: step
- 10: topmost stage of step
- 11: slope
- A: front circulating flow
- A2: front upstream flow
- B: rear circulating flow
- C: middle circulating flow
- D: stagnating region (damwall front portion)
- E: stagnating region (step rear portion)
- F: stagnating region (damwall rear portion)
- L: total length of inner face of glass melting furnace
- L_{S}: distance from raw material feeding portion to first stage of step
- L_{B}: distance from raw material feeding portion to bubbler
- L_{D}: distance from raw material feeding portion to damwall
- L₁: depth of first stage of step
- L₂: depth of second stage of step
- L₃: depth of third stage of step
- L₄: length of flat portion of topmost stage of step
- H: height from deepest portion to liquid face of molten glass
- H_{S}: step height from deepest portion to topmost stage
- H_{D}: height from deepest portion to upper end of damwall
- H₁: height of step from deepest portion to first stage
- H₂: height of step from first stage to second stage
- H₃: height of step from second stage to third stage
- H₄: height of step from third stage to topmost stage

### BEST MODE FOR CARRYING OUT THE INVENTION

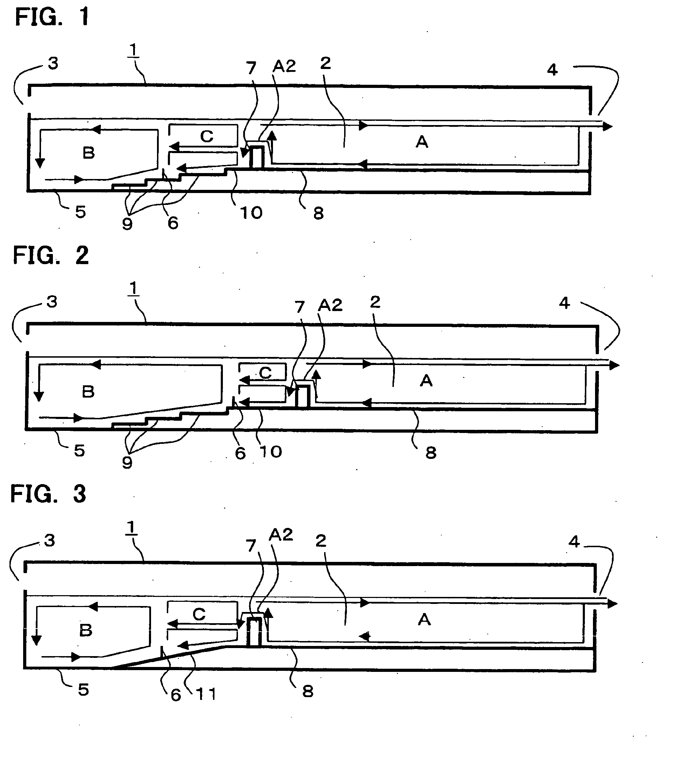

A glass melting furnace according to the invention will be explained centering on a structure thereof in reference to the drawings (Figs.1 through 5). Fig.1 shows convection in a molten glass in an outline section in a longitudinal direction of a glass melting furnace of an embodiment. Fig.2 shows convection in a molten glass in an outline section in a longitudinal direction of a glass melting furnace according to other embodiment. Fig.3 shows convection in a molten glass in an outline section in a longitudinal direction of a glass melting furnace according to other embodiment. Fig.4 shows parameters with regard to a shape of the embodiment. Fig.5 shows steps of a method of manufacturing a glass product. Further, although in the following explanation, an example is taken by soda lime glass constituting a material of a glass sheet for architecture or a glass sheet for an automobile as glass, the glass according to the invention is not limited to the soda lime glass. A condition of a temperature or the like of a molten glass can be changed by a kind of the glass and is not limited to the following condition.

A glass melting furnace 1 of the invention includes a raw material feeding portion 3, steps 9, 10, the bubbler 6, a stage portion 8, the damwall 7, and a molten glass guide out portion 4. A method of manufacturing a glass product utilizing the glass melting furnace 1 according to the invention includes a melting step of feeding a raw material from the raw material feeding portion 3 to melt by using the glass melting furnace 1 to thereby produce a molten glass 2, a forming step of constituting the molten glass 2 coming out from the molten glass guide out portion 4 after melting by a product shape, and a annealing step of preventing a strain from remaining in the glass product after forming (refer to Fig.5).

As the forming step, there is a float method, or a roll out method as a publicly-known technology, either thereof, or other method will do. Explaining as follows by taking an example of the float method, in the forming step, the molten glass is introduced from a downstream portion of the glass melting furnace 1 to a molten tin bath, the step is progressed by floating the molten glass on molten tin to form into a glass ribbon. In the forming step, in order to form the glass ribbon thinner than a balance thickness of the molten glass, rotating rolls referred to as top-rolls are pressed to both end portions in a width direction orthogonal to a progressing direction, a tension is applied in the width direction and the glass ribbon on molten tin is elongated also in the progressing direction while restraining the width of the glass ribbon from being contracted. The successive annealing step is a step after extracting the glass ribbon from molten tin by a lift-out-roll after forming. Annealing is carried out by a metal roll constituting a mechanism for carrying the glass ribbon, and a annealing furnace having a mechanism for gradually lowering a temperature of the glass ribbon. According to the mechanism of lowering the temperature gradually, a heat amount an output of which is controlled is supplied to a necessary position in the furnace by a combustion gas or an electric heater, thereby, the glass ribbon is slowly cooled to a temperature region near to a ambient temperature. Thereby, a residual stress present in the glass ribbon can be eliminated. The steps other than the melting step are not particularly influenced in a manufacturing condition by using the glass melting furnace 1 of the invention.

The raw material feeding portion 3 is arranged at a rear portion of the glass melting furnace 1, includes an opening provided at a region upward from the molten glass 2 and feeds the raw material therefrom to an upper layer of the previously melted molten glass 2. The molten glass guide out portion 4 is arranged at a front portion of the glass melting furnace 1, and is opened such that upper layer portion of the molten glass 2 can be guided out from the glass melting furnace. Further, a position of the raw material feeding portion 3 is at an inner wall of an end portion of the glass melting furnace on a side opposed to a direction of guiding out the molten glass as shown by Fig.1. Structures thereof may be any structures so far as the raw material can be feed and the molten glass 2 can be guided out.

In melting, in order to melt the raw material, not illustrated, the molten glass 2 is heated to 1400°C or higher by burners installed in a space above the molten glass 2 near to the raw material feeding portion 3 at inside of the glass melting furnace 1. Further, burners or the like may be arranged to heat the glass also on an upper side of a side face of the glass melting furnace 1 for melting, although not illustrated. The temperature of the molten glass 2 is lowered from 1650°C to about 1000°C between the raw material feeding portion and the molten glass guide out portion. The molten glass 2 is moved from the raw material feeding portion 3 to the molten glass guide out portion 4 by convection and a circulation to be discharged from the glass melting furnace 1. Inner walls of a deepest portion 5, and a side face of the glass melting furnace 1 are constructed by integrating fire brick or the like in order to reduce an erosion by the molten glass and prolong service life. The fire brick comprises a material of alumina species electro fused cast block, zirconia species electro fused cast block, dense quality chromium species brick or the like from a view point of not only heat resistance, long service life but a reduction in bubbles generated from brick.

A position of a first stage of a step is preferably 0.15≦L_{S}/L≦0.25, further preferably 0.16≦L_{S}/L≦0.23, and particularly preferably 0.17≦L_{S}/L≦0.21 from a view point of a balance of a melting performance mainly at the rear region and a fining at the front region when a total length in the guide out direction of the inner wall of the glass melting furnace shown in Fig.4 is designated by notation L and a distance from the inner wall of an end portion of the glass melting furnace on a side opposed to the molten glass guide out direction constituting the raw material feeding portion is designated by notation L_{S}. Although it is not necessary that in respective steps, heights of the steps are the same, in consideration of constituting by brick, the heights are preferably the same length including depth sides of the respective steps 9 excluding the step 10 of the topmost stage. When an inclination of the steps is constituted by a value dividing a total of the heights of the respective stages of steps excluding a bottommost stage (H₂+H₃+H₄) by a total of steps (lengths in the molten glass guide out direction) of the respective stages of the steps (excluding the topmost stage. L₁+L₂+L₃), from a view point of reducing an abrupt pressure loss, the value is preferably equal to or larger than 0.02 and equal to or smaller than 0.07, further preferably equal to or larger 0.03 and 0.065, particularly preferably equal to or larger than 0.04 and 0.06. Although steps of Fig.1 and Fig.2 are constituted by 4 stages, from a view point of integration of furnace material and inclination of the steps, a plurality of the steps 9 will do, 2 through 8 stages are further preferable, particularly, 3 through 6 stages are preferable. Further, all the step portions can also be constituted by a larger number of steps by which the steps can be regarded substantially as a slope, and the total step portions may be replaced by a smooth slope.

The stage portion 8 is arranged by extending the topmost stage of the step 10 crossing the width direction of the glass melting furnace 1 at the deepest portion 5. A height of the stage portion 8 (topmost stage of step) is preferably 0.10≦H_{S}/H≦0.50, further preferably, 0.20≦H_{S}/H≦0.40, and particularly preferably 0.25≦H_{S}/H≦0.35 from a view point of ensuring a convection speed of the front circulating flow A when a depth from the deepest portion of the glass melting furnace shown in Fig.4 to the liquid face of the molten glass is designated by notation H, a height from the deepest portion of the glass melting furnace to the topmost stage of the step, that is, a height of the stage portion 8 is designated by notation H_{S}. Further, H is preferably in a range of 0.5m through 2m. It is preferable that the stage portion 8 is provided with the same height until a molten glass guide out end of the glass melting furnace 1 and is not provided with a projected article or the like disturbing the convection. The stage portion 8 is constructed by integrating fire brick similar to other portion of the inner face of the glass melting furnace 1. A material of the fire brick may be constituted by a material the same as that of other portion.

The damwall 7 is arranged on a side of the topmost stage 10 of the step of the stage portion 8 by crossing in the width direction of the glass melting furnace 1 in order to divide the circulating flows of the front portion and the rear portion. However, the damwall 7 is on a side of the step and on a front side of the bubbler 6. A position thereof is preferably 0.30≦L_{D}/L≦0.50, further preferably 0.33≦L_{D}/L≦0.45, and particularly preferably 0.36≦L_{D}/L≦0.40 from a view point of ensuring a front circulating region when a distance from the raw material feeding portion to the damwall 7 shown in Fig.4 is designated by notation L_{D}. Further, a height of the damwall 7 is preferably 0.60≦H_{D}/H≦0.75, further preferably 0.60≦H_{D}/H≦0.70, and particularly preferably 0.60≦H_{D}/H≦0.65 from a view point of dividing the rear circulating flow B and the front circulating flow A when a height from the deepest portion of the furnace shown in Fig.4 to an upper end portion of the damwall 7 is designated by notation H_{D}. Further, H is preferably in a range of 0.5m through 2m. Further, from a view point of forming a front upstream flow A2, 0.35≦(H_{D}-H_{S})/(H-H_{S})≦0.65 is preferable and 0.36≦(H_{D}-H_{S})/(H-H_{S})≦0.55 is further preferable, and 0.37≦(H_{D}-H_{S})/(H-H_{S})≦0.50 is particularly preferable. The damwall 7 may be constructed by integrating fire brick similar to other portion. A material of the damwall 7 may be constituted by the material the same as that of other portion. A depth of the damwall 7 (a length in the longitudinal direction of the furnace) may be constituted by a depth of dividing the circulating flows, and therefore, it is preferable to constitute a ratio of the depth to the length L in the longitudinal direction is constituted by 0.015 through 0.033, the ratio is further preferably 0.016 through 0.025, and the ratio is particularly preferably 0.017 through 0.023.

The bubbler 6 is provided by crossing the width direction of the glass melting furnace 1 on the stage of the step for generating a convection mainly in an upper direction to the molten glass 2 by generating bubbles from a bottom face of the furnace. The step of the stage provided with the bubbler may be any of the plurality of steps 9. Further, the bubbler 6 may be disposed on the rear side of the damwall 7 at the topmost stage 10. When the bubbler 6 falls in the range, a significant difference is not brought about in the effect as described later. When a distance from the raw material feeding portion shown in Fig.4 to the bubbler is designated by notation L_{S}, from a view point of forming a middle circulating flow C between the rear circulating flow B and the front circulating flow A, a position of the bubbler is preferably 0.20≦L_{B}/L≦0.40, further preferably 0.22≦L_{B}/L≦0.38, and particularly permeably 0.24≦L_{B}/L≦0.36. An amount of discharging bubbles differs by the structure of the furnace.

An explanation will be given as follows of a characteristic of the convection of the molten glass at inside of the glass melting furnace according to the invention and an effect thereof by utilizing Fig.1. As shown by Fig.1, according to the structure of the glass melting furnace 1 of the invention, there are provided the bubbler 6 disposed at the middle stage of the plurality of steps 9 crossing in the width direction from a middle of the inner deepest portion 5 of the glass melting furnace, and the damwall 7 on a side of the step 10 of the topmost stage of the plurality of steps, and therefore, the circulation can be activated by frequently using the bubbler 6 of the rear circulating flow B constituting a characteristic of the dam furnace of Fig.7 and the rear temperature level can be maintained at high temperatures and the homogeneous property of the molten glass 2 is improved. When the bubbler 6 is disposed on the rear side of the damwall 7 on the topmost stage 10 of the step as shown by Fig.2, a significant difference is not brought about from the convection structure of a case of Fig.1 to achieve a similar effect. In the case of the position of the bubbler of Fig.2, the rear circulating flow B can be made to be relatively large. However, large or small of the rear circulating flow is an item determined by the respective glass melting furnaces.

Further, a section of the flow path is gradually narrowed on the rear side of the damwall 7, and therefore, there is not an abrupt reduction in the section of the flow path and there is not the stagnating region (damwall rear portion) F of the molten glass 2 on a side of a vicinity of the rear portion of the damwall 7 which is concerned in the dam furnace and the dam & step furnace of Fig.9. Further, by making the section of the flow path between the bubbler 6 and the damwall 7 narrower than those of the region of the raw material feeding portion 3 and the rear portion of the bubbler 6, the two upper and lower middle circulating flows C are formed, the circulation at the region is restrained, and the speed of the front circulating flow A of the molten glass 2 flowing at the front portion is reduced. As a result, different from the flat furnace of Fig.6, a residence time period at high temperatures of the upper region of the step constituting the front region of the damwall 7 is prolonged, there is not the stagnating region (damwall front portion) D which is concerned in the dam furnace, the fining is promoted. Particularly, the upper layer region of the molten glass 2 at a vicinity of a front portion of the damwall 7 is a portion which is important for the fining and the high defoaming (fining) effect is achieved by maintaining the temperature of the molten glass 2 at the portion at high temperatures.

Further, the front circulating region of the topmost stage 10 of the step and the stage portion 8 shallow and there is the damwall 7, and therefore, the temperature of the bottom face of the stage portion is elevated by a combustion space on an upper side of the molten glass and transmission of infrared ray from the upper layer of the molten glass, further, the stagnating portion on the side of the molten glass guide out portion at the vicinity of the damwall 7 is reduced, and therefore, reboil or ream can be reduced from being brought about. Further, a rearward flow of the front circulating flow A is provided with a flow rate to a degree the same as that of a forward flow by the damwall 7, the damwall 7 is disposed on the stage portion 8, a height of the damwall 7 is lower than that of the dam furnace, and therefore, a flow is liable to move upstream to the middle region or the rear portion by passing the region having the high fining of the upper portion of the damwall 7, there is not also a stagnation of the respective portions, as a result, high homogenizing production and fining can be achieved by remelting, reheating, and refining, which cannot be observed in other glass melting furnace.
The high effect is achieved by integrating the constituent elements of the steps, the bubbler, the damwall, and the stage portion, and the high fining and homogeneous property are achieved without bringing about a reduction in the pull by resolving the respective problems of the furnace of the background art.

Further, although in the explanation, a case comprising the plurality of steps has been explained, as other embodiment shown in Fig.3, there is a case in which all step portions of Fig.1 are replaced by a slope 11. Further, a structure substantially similar to that of the slope can also be constituted by constituting the four stages of steps of Fig.1 by a larger number of steps. Also in these cases, an effect similar to that of the case in the step-like shape can be achieved. The portion of the slope 11 can be formed by integrating fire brick similar to the step portion. However, in forming the slope portion, time and labor of an operation are taken more than the case of the step. Even when the step portion of Fig.2 is replaced by the slope, an effect similar to that of Fig.3 is achieved.

### [Example]

In order to confirm effectiveness for the fining and homogeneous property of the section structure of the glass melting furnace according to the invention, a numerical analysis was carried out for convections of the glass melting furnace of the invention and other furnace. The analysis of convection was carried out by a program based on a difference method, in consideration of a temperature and a viscosity by constituting the molten glass by an incompressive fluid, and constituting input conditions by a glass melting furnace operating condition, a glass melting furnace shape, and a furnace material constitution. The program carried out a heat transfer analysis of the combustion space on the upper side of the molten glass and a heat convection analysis of the molten glass. In the heat transfer analysis of the upper combustion space, a heat transfer amount provided to the surface of the surface of the molten glass was calculated by calculating an angular relationship of determining a heat transfer ratio of a radiation amount (radiation configuration factor/ view factor), upper radiation, and convection heat transfer. In the convection analysis, a flaw speed and a temperature were calculated by solving simultaneous equations with regard to the flaw speed and the temperature.

The analysis was carried out by a program developed by its own corporation, and a software capable of carrying out a numerical analysis of a convection of a molten glass, for example, trade mark name GFM (developed and sold by glass service corporation, Czechoslovakia), a trade mark name GTM-X (developed and sold by TNO, Holland) or the like, a similar calculation reflecting structures of respective furnaces and in accordance with a physical property of glass can be carried out and a qualitatively similar result is provided.

Example 1 is for the glass melting furnace according to the invention (Fig.1), Comparative Example 1 is for the flat furnace (Fig.6), Comparative Example 2 is for the dam furnace (Fig.7), and Comparative Example 3 is for the step furnace (Fig.8). Further, the dam & step furnace (Fig.9) is not significantly different from the dam furnace in the effect for the fining and homogeneous property.

Table 1 and Table 2 show major analysis conditions for the respective furnaces. Further, the analysis was carried out under a condition in which an object was constituted by soda lime glass, pulls of all of the glass melting furnace were made to be the same (500 ton/day), the length in the longitudinal direction was sufficiently longer than the length in the width direction as in a normal glass melting furnace, and a convection in the longitudinal direction was dominant more than a convection in the width direction. Further, a ratio of the length L in the longitudinal direction of the glass melting furnace to the molten glass deepest portion depth H was made to be 30, and a ratio of the depth of the damwall to the length L in the longitudinal direction was made to be 0.02, and H was made to be 1.5m. H achieves substantially similar effect when H is in the range of 0.5m through 2m. Further, in order to make clear a difference of effect by Example and Comparative Example, heat amounts and bubbler flow rates provided to the respective glass melting furnaces were set such that a temperature of the molten glass of the upper layer of the front portion of the damwall constituting an important parameter for the fining in all of the glass melting furnaces was made to be 1500°C and a temperature of the molten glass at the guide out port was made to be 1100°C. Amounts of exhausting bubbles by the bubblers per unit time were respectively 0.1, 1.0, 0.3 for Comparative Example 1, Comparative Example 2, Comparative Example 3, when the amount in the case of Example 1 was made to be 1.0. Thereby, a comparison of the respective glass melting furnace under a condition of achieving a comparatively high effect can be carried out.

Table 3 shows quality predicts indices showing degrees of the fining and the homogeneous property of the respective glass melting furnaces. Index "a" relates to winding up of the molten glass from a lower layer portion at the topmost stage (front portion) of the step, and is defined by an elevating vector in the convection (in rearward flow) of the lower layer portion. When the elevating vector is small, matrices having different temperature histories of the lower layer portion are not wound up, a bubble defect thereby is small and fining is excellent.
Index "b" relates to the homogeneous property and is defined by a shear force of the rear circulating flow. When the shear force is large, the molten glass is excellently stirred and the homogeneous property is excellent.
Index "c" relates to the fining and is defined by a residence time period at a high temperature region (1450°C or higher) of the upper layer of the molten glass at a vicinity of the front portion of the damwall. The longer the residence time period at the high temperature region, the more excellent the fining. Further, index "c" is higher than index "a" in a degree of being important relatively as the index indicating the fining. Further, the respective indices are shown by ratios constituting those of Comparative Example 1 by 1.0.

As shown by Fig.3, Example 1 shows the highest fining index "a". Further, in index "b", although index value is smaller in Example 1 than in Comparative Example 2, index value is larger than those of Comparative Examples 1 and 3 and showing an excellent homogeneous property. In index "c", Example 1 shows the highest fining. In Example 1, also the rearward flow of the front portion joints to the high temperature region, and therefore, a higher fining is shown. In Example 1, that the index value of index "c" is the highest in addition to index "a" indicates that the fining by the structure of the glass melting furnace according to the invention is significantly higher than that of other glass melting furnace. From the results, it is known that Example 1 achieves an effect as a structure of making the fining and the homogeneous property compatible.

Separately, when as the glass melting furnace according to the invention, a glass melting furnace under a condition substantially the same as that of Example 1 was constructed, and fining and a homogeneous property of a glass product thereby were evaluated, a quality higher than that of the furnace of the background art was achieved as predicted.

It is known from the above-described that the method of manufacturing a glass product comprising the melting step characterized in the section structure of the glass melting furnace according to the invention achieved the effect in the fining and the homogeneous property. The provided high fining and homogeneous property enable to increase the pull by that amount and enable to promote also the productivity.

**[Table 1]**

| conditions with regard to depth direction | Example 1 | Comparative Example 1 | Comparative Example 2 | Comparative Example 3 |
|---|---|---|---|---|
| height H/H from deepest portion to molten glass liquid face | 1.00 | 1.00 | 1.00 | 1.00 |
| height H_{D}/H from deepest portion to damwall upper end | 0.60 | - | - | 0.60 |
| step height H₁/H from deepest portion to first stage | 0.08 | - | - | 0.08 |
| step height H₂/H from first stage to second stage | 0.08 | - | - | 0.08 |
| step height H₃/H from second stage to third stage | 0.08 | - | - | 0.08 |
| step height H₄/H from third stage to topmost stage | 0.08 | - | - | 0.08 |
| step height H_{S}/H from deepest portion to topmost | 0.32 | - | - | 0.32 |
| stage | | | | |

**[Table 2]**

| conditions with regard to longitudinal direction | Example 1 | Comparative Example 1 | Comparative Example 2 | Comparative Example 3 |
|---|---|---|---|---|
| total length L/L of glass melting furnace inner wall | 1.00 | 1.00 | 1.00 | 1.00 |
| distance L_{D}/L from raw material feeding portion to damwall | 0.38 | - | 0.38 | - |
| distance L_{B}/L from raw material feeding portion to bubbler | 0.26 | 0.26 | 0.26 | 0.26 |
| distance L_{S}/L from raw material feeding portion to first stage of step | 0.19 | - | - | 0.19 |
| depth L₁/L of first stage of step | 0.06 | - | - | 0.06 |
| depth L₂/L of second stage of step | 0.06 | - | - | 0.06 |
| depth L₃/L of third stage of step | 0.06 | - | - | 0.06 |
| length L₄/L of flat portion of topmost stage step | 0.63 | - | - | 0.63 |

**[Table 3]**

| quality predict index | Example 1 | Comparative Example 1 | Comparative Example 2 | Comparative Example 3 |
|---|---|---|---|---|
| index "a" | 0.41 | 1.0 | 0.46 | 0.48 |
| index "b" | 1.68 | 1.0 | 1.91 | 1.30 |
| index "c" | 1.28 | 1.0 | 1.16 | 0.85 |

### INDUSTRIAL APPLICABILITY

The invention is suitable for melting glasses comprising various compositions and a method of manufacturing glass products comprising the glasses.

## Claims

1. A glass melting furnace (1) comprising:
a plurality of steps (9, 10) elevated from a middle of a deepest portion (5) of an inner portion of the glass melting furnace (1) along a direction of guiding out a molten glass and crossing in a width direction orthogonal to the direction of guiding out the molten glass; and
**characterized in that** the glass melting furnace (1) further comprises:
a stage portion (8) extending from a topmost stage of the step (10) in the direction of guiding out the molten glass and crossing in the width direction;
a damwall (7) crossing in the width direction on a side of the step of the stage portion (8); and
a bubbler (6) crossing in the width direction between above the step of a bottommost stage of the step and the damwall (7).

2. The glass melting furnace (1) according to Claim 1, wherein a position of the step satisfies 0.15 ≤ L_{S}/L ≤ 0.25 when a total length of an inner wall of the glass melting furnace (1) in the direction of guiding out the molten glass is designated by a notation L and a distance from an inner wall of an end portion of the glass melting furnace on a side opposed to the direction of guiding out the molten glass to a first stage of the step is designated by a notation L_{S}.

3. The glass melting furnace (1) according to Claim 1 or 2, wherein a value of dividing a total of heights of the respective stage excluding the bottommost stage of the step by a total of lengths in the direction of guiding out the molten glass of the respective stages excluding the topmost stage (10) is 0.02 through 0.07.

4. The glass melting furnace (1) according to any one of Claims 1 through 3, wherein the height of the step satisfies 0.5m ≤ H ≤ 2.0m and 0.10 ≤ H_{S}/H ≤ 0.50 when a depth from the deepest portion (5) of the glass melting furnace (1) to a liquid face of the molten glass is designated by a notation H, and a height from the deepest portion (5) of the glass melting furnace (1) to the topmost stage of the step (10)is designated by a notation H_{S}.

5. The glass melting furnace according to any one of Claims 1 through 4, wherein a step number of the steps (9, 10) is 3 through 6.

6. A glass melting furnace (1) **characterized in that** the glass melting furnace (1) comprises:
a slope (11) elevated from a middle of a deepest portion (5) of an inner portion of the glass melting furnace (1) along a direction of guiding out a molten glass and crossing in a width direction orthogonal to the direction of guiding out the molten glass;
a stage portion (8) extending from a topmost portion of the slope in the direction of guiding out the molten glass and crossing in the width direction;
a damwall (7) crossing in the width direction on a side of the slope (11) of the stage portion (8); and
a bubbler (6) crossing in the width direction between a position of starting to elevate the slope (11) and the damwall (7).

7. The glass melting furnace (1) according to any one of Claims 1 through 6, wherein a position of the damwall (7) satisfies 0.30 ≤ L_{D}/L ≤ 0.50 when the total length of the inner wall of the glass melting furnace (1) in the direction of guiding out the molten glass is designated by the notation L, and a distance from an inner wall of an end portion of the glass melting furnace (1) on a side opposed to the direction of guiding out the molten glass to the damwall (7) is designated by a notation L_{D}.

8. The glass melting furnace (1) according to any one of Claims 1 through 7, wherein a height of the damwall (7) satisfies 0.5m ≤ H ≤ 2.0m and 0.60 ≤ H_{D}/H ≤ 0.75 when a depth from the deepest portion (5) of the glass melting furnace (1) to the liquid face of the molten glass is designated by the notation H and a height from the deepest portion (5) of the glass melting furnace (1) to an upper end portion of the damwall (7) is designated by a notation H_{D}.

9. The glass melting furnace (1) according to Claim 8, wherein the height of the damwall (7) further satisfies 0.35 ≤ (H_{D}-H_{S})/(H-H_{S}) ≤ 0.65.

10. The glass melting furnace (1) according to any one of Claims 1 through 9, wherein a length in the directionof guiding out the molten glass of the damwall (7) becomes 0.015L through 0.033L for the total length L of the inner wall of the glass melting furnace (1) in the guide out direction.

11. The glass melting furnace (1) according to any one of Claims 1 through 10, wherein a position of the bubbler (6) satisfies 0.20 ≤ L_{B}/L 0.40 when the total length in the guide out direction of the inner wall of the glass melting furnace (1) is designated by the notation L, and a distance from the inner wall of an end portion of the glass melting furnace (1) on a side opposed to the direction of guiding out the molten glass to the bubbler (6) is designated by a notation L_{B}.

12. The glass melting furnace (1) according to any one of Claims 1 through 11, wherein the bubbler (6) and the damwall (7) are disposed at the stage portion (8).

13. The glass melting furnace (1) according to any one of Claims 1 through 5, and 7 through 11, wherein the bubbler (6) is disposed on the stage excluding the topmost stage of the step (10).

14. The glass melting furnace (1) according to any one of Claims 6 through 11, wherein the bubbler (6) is disposed on the slope (11).

15. A method of manufacturing a molten glass, wherein a glass raw material is melted by the glass melting furnace (1) according to any one of Claims 1 through 14.

16. A method of manufacturing a glass product comprising a melting step of melting a glass raw material by the glass melting furnace (1) according to any one of Claims 1 through 14.

## Patentansprüche

1. Glasschmelzofen (1), umfassend:
eine Mehrzahl von Stufen (9, 10), die von einer Mitte eines tiefsten Abschnitts (5) eines inneren Abschnitts des Glasschmelzofens (1) entlang einer Richtung des Herausführens einer Glasschmelze erhöht sind bzw. sich erhöhen und in einer Breitenrichtung orthogonal zu der Richtung des Herausführens der Glasschmelze kreuzen; und
**dadurch gekennzeichnet, dass** der Glasschmelzofen (1) ferner umfasst:
einen Absatzabschnitt (8), der sich von einem obersten Absatz der Stufe (10) in der Richtung des Herausführens der Glasschmelze erstreckt und in der Breitenrichtung kreuzt;
eine Stauwand (7), die in der Breitenrichtung auf einer Seite der Stufe des Absatzabschnitts (8) kreuzt; und
eine Blasenerzeugungseinrichtung bzw. einen Bubbler (6), die bzw. der in der Breitenrichtung zwischen oberhalb der Stufe eines untersten Absatzes der Stufe und der Stauwand (7) kreuzt.

2. Glasschmelzofen (1) nach Anspruch 1, wobei eine Position der Stufe 0,15 ≤ L_{S}/L ≤ 0,25 erfüllt, wenn eine Gesamtlänge einer inneren Wand des Glasschmelzofens (1) in der Richtung des Herausführens der Glasschmelze durch eine Bezeichnung L bezeichnet wird und ein Abstand von einer inneren Wand eines Endabschnitts des Glasschmelzofens auf einer Seite gegenüberliegend bzw. entgegensetzt zu der Richtung des Herausführens der Glasschmelze zu einem ersten Absatz der Stufe durch eine Bezeichnung L_{S} bezeichnet wird.

3. Glasschmelzofen (1) nach Anspruch 1 oder 2, wobei ein Wert des Teilens einer Gesamtheit der Höhen der jeweiligen Stufe ausgenommen des untersten Absatzes der Stufe durch eine Gesamtheit der Längen in der Richtung des Herausführens der Glasschmelze der jeweiligen Absätze ausgenommen des obersten Absatzes (10) 0,02 bis 0,07 ist.

4. Glasschmelzofen (1) nach einem der Ansprüche 1 bis 3, wobei die Höhe der Stufe 0,5m ≤ H ≤ 2,0 m und 0,10 ≤ H_{S}/H ≤ 0,50 erfüllt, wenn eine Tiefe von dem tiefsten Abschnitt (5) des Glasschmelzofens (1) zu einer flüssigen Fläche bzw. Seite der Glasschmelze durch eine Bezeichnung H bezeichnet wird und eine Höhe von dem tiefsten Abschnitt (5) des Glasschmelzofens (1) zu dem obersten Absatz der Stufe (10) durch eine Bezeichnung H_{S} bezeichnet wird.

5. Glasschmelzofen nach einem der Ansprüche 1 bis 4, wobei eine Stufenanzahl der Stufen (9, 10) 3 bis 6 ist.

6. Glasschmelzofen (1), **dadurch gekennzeichnet, dass** der Glasschmelzofen (1) umfasst:
eine Abschrägung (11), die von einer Mitte eines tiefsten Abschnitts (5) eines inneren Abschnitts des Glasschmelzofens (1) entlang einer Richtung des Herausführens einer Glasschmelze erhöht ist bzw. sich erhöht und in einer Breitenrichtung orthogonal zu der Richtung des Herausführens der Glasschmelze kreuzt;
einen Absatzabschnitt (8), der sich von einem obersten Abschnitt der Abschrägung in der Richtung des Herausführens der Glasschmelze erstreckt und in der Breitenrichtung kreuzt;
eine Stauwand (7), die in der Breitenrichtung auf einer Seite der Abschrägung (11) des Absatzabschnitts (8) kreuzt; und
eine Blasenerzeugungseinrichtung bzw. einen Bubbler (6), die bzw. der in der Breitenrichtung zwischen einer Position des Beginnens des Erhöhens der Abschrägung (11) und der Stauwand (7) kreuzt.

7. Glasschmelzofen (1) nach einem der Ansprüche 1 bis 6, wobei eine Position der Stauwand (7) 0,30 ≤ L_{D}/L ≤ 0,50 erfüllt, wenn die Gesamtlänge der inneren Wand des Glasschmelzofens (1) in der Richtung des Herausführens der Glasschmelze durch eine Bezeichnung L bezeichnet wird und ein Abstand von einer inneren Wand eines Endabschnitts des Glasschmelzofens (1) auf einer Seite gegenüberliegend bzw. entgegensetzt zu der Richtung des Herausführens der Glasschmelze zu der Stauwand (7) durch eine Bezeichnung L_{D} bezeichnet wird.

8. Glasschmelzofen (1) nach einem der Ansprüche 1 bis 7, wobei eine Höhe der Stauwand (7) 0,5m ≤ H ≤ 2,0 m und 0,60 ≤ H_{D}/H ≤ 0,75 erfüllt, wenn eine Tiefe von dem tiefsten Abschnitt (5) des Glasschmelzofens (1) zu der flüssigen Fläche bzw. Seite der Glasschmelze durch eine Bezeichnung H bezeichnet wird und eine Höhe von dem tiefsten Abschnitt (5) des Glasschmelzofens (1) zu einem oberen Endabschnitt der Stauwand (7) durch eine Bezeichnung H_{D} bezeichnet wird.

9. Glasschmelzofen (1) nach Anspruch 8, wobei die Höhe der Stauwand (7) ferner 0,35 ≤ (H_{D}-H_{S})/(H-H_{S}) ≤ 0,65 erfüllt.

10. Glasschmelzofen (1) nach einem der Ansprüche 1 bis 9, wobei eine Länge in der Richtung des Herausführens der Glasschmelze der Stauwand (7) 0,015L bis 0,033L für die Gesamtlänge L der inneren Wand des Glasschmelzofens (1) in der Herausführrichtung wird.

11. Glasschmelzofen (1) nach einem der Ansprüche 1 bis 10, wobei eine Position des Bubblers (6) 0,20 ≤ L_{B}/L 0,40 erfüllt, wenn die Gesamtlänge in der Herausführrichtung der inneren Wand des Glasschmelzofens (1) durch die Bezeichnung L bezeichnet wird und ein Abstand von der inneren Wand eines Endabschnitts des Glasschmelzofens (1) auf einer Seite gegenüberliegend bzw. entgegensetzt zu der Richtung des Herausführens der Glasschmelze zu dem Bubbler (6) durch eine Bezeichnung L_{B} bezeichnet wird.

12. Glasschmelzofen (1) nach einem der Ansprüche 1 bis 11, wobei der Bubbler (6) und die Stauwand (7) an dem Absatzabschnitt (8) angeordnet sind.

13. Glasschmelzofen (1) nach einem der Ansprüche 1 bis 5 und 7 bis 11, wobei der Bubbler (6) an bzw. auf dem Absatz ausgenommen des obersten Absatzes der Stufe (10) angeordnet ist.

14. Glasschmelzofen (1) nach einem der Ansprüche 6 bis 11, wobei der Bubbler (6) an bzw. auf der Abschrägung (11) angeordnet ist.

15. Verfahren zum Herstellen einer Glasschmelze, wobei ein Glasrohmaterial durch den Glasschmelzofen (1) nach einem der Ansprüche 1 bis 14 geschmolzen wird.

16. Verfahren zum Herstellen eines Glasprodukts, umfassend einen Schmelzschritt des Schmelzens eines Glasrohmaterials durch den Glasschmelzofen (1) nach einem der Ansprüche 1 bis 14.

## Revendications

1. Four de verrerie (1), comprenant :
une série de degrés (9, 10) élevés depuis le centre d'une partie la plus profonde (5) d'une partie interne du four de verrerie (1) en direction de la sortie du verre fondu et croisant la direction de la largeur, de manière orthogonale à la direction de sortie du verre fondu, et
**caractérisé en ce que** le four de verrerie (1) comprend en outre :
une partie de stade (8) s'étendant depuis le stade le plus élevé du degré (10) en direction de sortie du verre fondu et croisant la direction de la largeur ;
un mur de barrage (7) croisant la direction de la largeur sur un côté du degré de la partie de stade (8), et
un bulleur (6) croisant la direction de la largeur entre au-dessus du degré d'un stade le plus bas du degré et le mur de barrage (7).

2. Four de verrerie (1) selon la revendication 1, où la position du degré satisfait 0,15 ≤ L_{S}/L≤0,25 lorsque la longueur totale de la paroi interne du four de verrerie (1) en direction de la sortie du verre fondu est dénommée par L et la distance entre la paroi interne d'une partie terminale du four de verrerie sur un côté opposé à la direction de sortie du verre fondu au premier stade du degré est dénommée L_{S}.

3. Four de verrerie (1) selon la revendication 1 ou 2, où la valeur du rapport du total des hauteurs des stades respectifs à l'exclusion du stade le plus bas du degré au total des longueurs en direction de la sortie du verre fondu des stades respectifs à l'exclusion du stade le plus élevé (10) se situe dans l'intervalle allant de 0,02 à 0,07.

4. Four de verrerie (1) selon l'une quelconque des revendications 1 à 3, où la hauteur du degré satisfait 0,5 m ≤ H ≤ 2,0 m et 0,10 ≤ H_{S}/H ≤ 0,50, lorsque la profondeur de la partie la plus profonde (5) du four de verrerie (1) à une face liquide du verre fondu est dénommée H, et la hauteur depuis la partie la plus profonde (5) du four de verrerie (1) au stade le plus élevé du degré (10) est dénommée H_{S}.

5. Four de verrerie (1) selon l'une quelconque des revendications 1 à 4, où le nombre de degré des degrés (9, 10) se situe dans la plage allant de 3 à 6.

6. Four de verrerie (1) **caractérisé en ce que** le four de verrerie (1) comprend :
une pente (11) élevée depuis le centre d'une partie la plus profonde (5) d'une partie interne du four de verrerie (1) en direction de la sortie du verre fondu et croisant la direction de la largeur, de manière orthogonale à la direction de sortie du verre fondu ;
une partie de stade (8) s'étendant depuis une partie la plus élevée de la pente en direction de sortie du verre fondu et croisant la direction de la largeur ;
un mur de barrage (7) croisant la direction de la largeur sur un côté de la pente (11) de la partie de stade, et
un bulleur (6) croisant la direction de la largeur entre la position de début d'élévation de la pente (11) et le mur de barrage (7).

7. Four de verrerie (1) selon l'une quelconque des revendications 1 à 6, où la position du mur de barrage 0,30 ≤ L_{D}/L≤0,50 lorsque la longueur totale de la paroi interne du four de verrerie (1) en direction de la sortie du verre fondu est dénommée par L, et la distance entre la paroi interne d'une partie terminale du four de verrerie (1) sur un côté opposé à la direction de sortie du verre fondu au mur de barrage est dénommée L_{D}.

8. Four de verrerie (1) selon l'une quelconque des revendications 1 à 7, où la hauteur du mur de barrage satisfait 0,5 m ≤ H ≤ 2,0 m et 0,60 ≤ H_{D}/H ≤ 0,75, lorsque la profondeur de la partie la plus profonde (5) du four de verrerie (1) à une face liquide du verre fondu est dénommée H, et la hauteur depuis la partie la plus profonde (5) du four de verrerie (1) à la partie terminale supérieure du mur de barrage (7) est dénommée H_{D}.

9. Four de verrerie (1) selon la revendication 8, où la hauteur du mur de barrage satisfait 0,35 ≤ (H_{D}-H_{S})/(H-H_{S}) ≤ 0,65.

10. Four de verrerie (1) selon l'une quelconque des revendications 1 à 9, où la longueur en direction de la sortie du verre fondu du mur de barrage (7) passe de 0,015L à 0,033L pour la longueur totale L de la paroi interne du four de verrerie (1) en direction de la sortie.

11. Four de verrerie (1) selon l'une quelconque des revendications 1 à 10, où la position du bulleur (6) satisfait 0,20 ≤ L_{B}/L ≤ 0,40 lorsque la longueur totale en direction de la sortie de la paroi interne du four de verrerie (1) est dénommée L, et la distance de la paroi interne de la partie terminale du four de verrerie (1) du côté opposé à la direction de la sortie du verre fondu au bulleur (6) est dénommée L_{B}.

12. Four de verrerie (1) selon l'une quelconque des revendications 1 à 11, où le bulleur (6) et le mur de barrage (7) sont disposés dans la partie de stade (8).

13. Four de verrerie (1) selon l'une quelconque des revendications 1 à 5 et 7 à 11, où le bulleur (6) est disposé en un stade qui n'est pas le stade le plus élevé du degré (10).

14. Four de verrerie (1) selon l'une quelconque des revendications 6 à 11, où le bulleur (6) est disposé sur la pente (11).

15. Procédé de préparation d'un verre fondu, où une matière première de verre est fondue dans le four de verrerie (1) selon l'une quelconque des revendications 1 à 14.

16. Procédé de préparation d'un verre fondu, comprenant une étape de fusion d'une matière première de verre dans le four de verrerie (1) selon l'une quelconque des revendications 1 à 14.
